# EUROPEAN PATENT APPLICATION

(11) **EP 3 705 832 A1**
(43) Date of publication of application: **09.09.2020**
(21) Application number: 19160586.4
(22) Date of filing: 04.03.2019
(51) Int. Cl.: F28D 17/04, F28D 20/00, F28D 20/02

(54) **RECEIVING AND RELEASING THERMAL ENERGY**

(71) Applicant: Siemens Gamesa Renewable Energy GmbH & Co. KG, 20097 Hamburg (DE)
(72) Inventor: Gerhard, Maike, 22145 Hamburg (DE); Pagelsen, Niels, 22303 Hamburg (DE); Wagner, Jennifer Verena, 20257 Hamburg (DE)
(74) Representative: Aspacher, Karl-Georg

(57) **Abstract**

It is described an arrangement (100) for receiving and/or releasing, in particular storing, thermal energy, comprising: a container (101) for holding storage material (103), the container having a first fluid port (105) and a second fluid port (107) for allowing inflow and outflow of fluid (109) flowing through the container in a substantially horizontal flow direction (111, 112) for charging and/or discharging the storage material (103); at least two first valves (V1b, V1d) at different vertical positions for the first fluid port (105); at least two second valves (V2b, V2d) at different vertical positions for the second fluid port (107); and at least two temperature sensors (T1b, T1d) arranged within the container (101) at different vertical positions, in particular in one plane (P1) perpendicular to the flow direction.

## Description

### Field of invention

The present invention relates to an arrangement and to a method for receiving and/or releasing, in particular including storing, thermal energy.

### Art Background

WO 2016/150456 A1 discloses a thermal energy storage device comprising a container including a heat storage material having an inlet including a plurality of inlet channels distributed along a direction orthogonal to a longitudinal direction of the container, wherein each of the inlet channels has a respective actively controlled valve. Further, the container comprises an outlet including a plurality of outlet channels distributed along a direction orthogonal to the longitudinal direction, each of the outlet channels having a respective actively controlled valve.

It is a state of the art solution to convert fluctuating electrical energy from wind and/or solar power generators into heat in order to reconvert it back into electrical energy later. This flattens the power peaks which occur in national grids and supplies electrical energy in times of low wind and/or low solar irradiation, which makes these grids controllable and prevents blackouts.

To be able to convert the electrical energy into heat and back into electrical energy later, in addition to conventional process equipment for the energy transformation (e.g. electric heater and water-steam-cycle with heat recovery steam generator) a heat storage is needed which can store the heat over a period of time that is long enough to flatten the peaks described above. To do so, a horizontal, sensible heat storage can be used which contains a storage material that can be heated up by a gaseous heat transporting fluid, e.g. air, which is actively moved through the heat storage. This storage material can be stones and/or gravel.

When charging the heat storage, the heat transporting fluid is heated up e.g. by an electric heater, enters the heat storage with a high temperature at the hot side, transfers the heat to the storage material and exits the heat storage with a lower temperature at the cold side. The charging process on the cold side is terminated when the outlet temperature reaches a certain level which can be defined e.g. by material temperature restrictions of process equipment.

When discharging, the flow direction through the storage is reversed. The heat transporting fluid enters the heat storage with a low temperature at the cold side of the heat storage, absorbs the heat from the storage material and exits the heat storage with a higher temperature at the hot side. The discharging process is stopped whenever the discharging temperature of the heat storage drops below a certain level. The discharging-end temperature is defined by the down-stream process of heat usage which in the case of electricity production can be a water-steam- or an organic-rankine-cycle. Due to this cycling between two temperature levels, within every discharging process some residual heat remains inside the heat storage. The more vertically/equally distributed the temperature front - and the steeper the temperature gradient - between the hot and the cold end of the storage is, the smaller the amount of heat that remains in the storage after discharging and therefore, the better is the degree of utilization of the entire charge and discharge cycle.
In reality, this temperature front is not vertical due to natural convection and thermo-fluidic processes. Maldistributions of the flow can occur due to several reasons. When using air as a heat transporting fluid, a higher temperature results in a lower density which makes the hot air rise and the cold air fall. Because of that, the temperature of the upper storage material rises faster. Eventually, the hot side of the temperature front reaches the cold side of the heat storage so that hot air will exit at the cold side when charging. This results in a higher total temperature of the exiting fluid. In an open cycle this exiting heat is lost, whereas in a closed cycle it still leads to a quicker termination of the charging process and thus in a lower energy content (capacity). When discharging, some cold air will exit the heat storage at its hot side which also results in a quicker termination of the discharging process and a worse performance as well as energy losses due to mixing of hot and cold air.

The natural convection leads to another effect. The higher density of the heat transporting fluid due to lower temperature results in a smaller flow velocity with a lower pressure drop in the cold storage material. Due to the lower pressure drop, the heat transporting fluid prefers flowing through the colder storage material. This behavior is not desired during discharging, because charged areas of the storage are not flown through and capacity is lost. Another effect which occurs in horizontal heat storages with stones and/or gravel as a storage material is the formation of a gap between the storage material and the ceiling of the heat storage due to settling of the bed. This gap has a lower flow resistance than the storage material. This results in a higher mass flow, so that less of the heat transporting fluid actually flows through the storage material to transfer heat. The bypass flow supports the inclined temperature front that is formed by natural convection when charging and, at the same time, won't transfer as much heat as the mass flow that flows through the storage material. This results in an even higher temperature of the exiting fluid flow when charging and an even lower temperature of the exiting fluid flow when discharging. Both effects result in a lower efficiency of the entire charge-discharge cycle.

The state of the art solution to address at least the effect of natural convection on the temperature front is a vertical pebble bed heat storage. However, vertical storages are restricted in height because the total mass of the storage material has to be carried by a flow distribution device.

Thus, there may be a need for an arrangement and a method of receiving and/or releasing, in particular storing, thermal energy, wherein the efficiency of a charging and/or discharging process is improved. In particular, there may be a need for such a method an arrangement, wherein during charging and/or discharging a more homogeneous temperature distribution is achieved within a container holding storage material.

This need may be met by the subject matter according to the independent claims. Advantageous embodiments of the present invention are described by the dependent claims.

### Summary of the Invention

According to an embodiment of the present invention, it is provided an arrangement for receiving and/or releasing (in particular also storing) thermal energy, comprising: a container for holding storage material, the container having a first fluid port and a second fluid port for allowing inflow and outflow of fluid flowing through the container in a substantially horizontal flow direction for charging and/or discharging the storage material; at least two first valves at different vertical positions for the first fluid port; at least two second valves at different vertical positions for the second fluid port; and at least two temperature sensors arranged within the container at different vertical positions (in particular within at least one plane perpendicular to the flow direction).

The arrangement may also be configured for storing the thermal energy in the storage material which may be contained within the container. When receiving the thermal energy, at least a part of the thermal energy of the fluid may be transferred to and stored in the storage material, i.e. the storage material is charged. When the thermal energy is released, at least a portion of the thermal energy stored in the storage material may be transferred to the flowing fluid, thereby discharging the storage material.

The container may have any shape, such as a cuboid shape, a cylinder shape or another shape. The container may have a longitudinal axis which may be coinciding with the flow direction of the fluid, which flows in the horizontal direction. The flow direction is in particular different from a vertical direction. The storage material may be any material capable of storing thermal energy, in particular having a high thermal capacity. The storage material may for example comprise volcanic stone and/or ceramics.

The first fluid port may be utilized as an inlet port or an outlet port depending on whether charging or discharging the storage material is performed. The second fluid port may serve as an outlet or an inlet depending whether charging or discharging the storage material is performed. The first fluid port as well as the second fluid port may have any shapes, such as a rectangular shape, a cylinder shape, or the like. The first fluid port may be formed from a single opening or plural openings, such as configured as plural separate openings for example formed by several pipe ends or the like. The second fluid port may in particular be configured similar or same as the first fluid port. The first and the second fluid ports may allow fluid to enter or exit a lumen of the container during charging and/or discharging (receiving and/or relieving) thermal energy. The fluid may in particular comprise air or a particular gas. For charging the storage material (i.e. receiving thermal energy), the fluid may be relatively hot having temperature between 300°C and 1000°C. When flowing through the container having therein the storage material, a portion of the thermal energy of the fluid is transferred to the storage material. When discharging the storage material, the fluid may be relatively cold, for example having a temperature between 0°C and 300°C for example. When the cold fluid flows through the container having therein the storage material, in particular which is charged with thermal energy, part of the thermal energy stored in the storage material may be transferred to the fluid thereby heating-up the fluid. During charging and discharging the storage material, the flow direction may in both cases in a horizontal direction but may be opposite to each other. Thus, during charging, the hot fluid may enter at the first fluid port and exit at the second fluid port, while during discharging the cold fluid may enter at the second fluid port and exit at the first fluid port. Thus, the first fluid port and the second fluid port may serve as an inlet or outlet depending on the process being performed, i.e. depending on whether charging process or a discharging process is performed.

The at least two valves may each comprise a flap or a lid which can be moved, in particular turned or tilted, in order to allow or prohibit flow-through of the fluid. Each of the valves, i.e. each of the at least two first valves and the two second valves, may be set into different states defining a degree of opening or degree of closing. The at least two first valves as well as the at least two second valves are at different vertical positions, wherein the vertical position or the vertical direction is perpendicular to the horizontal direction. Thus, the two first valves are at different heights and also the second valves are at different heights. The at least two first valves may be controllable independently of each other. Also the second valves may be controlled independently of each other.

During charging the storage material, generally the temperature of the storage material may increase with increasing height. In order to achieve a more homogeneous temperature distribution (in the vertical direction), the lower one of the first valves may be controlled to open more than an upper one of the two first valves, in order to achieve a generally higher flow rate of the fluid in a lower section of the container than in the upper section of the container. Thus, having two independently controllable first valves at different vertical positions, may allow to achieve a more homogeneous temperature distribution in the vertical direction. Thereby, charging efficiency may be improved.

Similarly, during discharging (in which the second fluid port may act or serve as an inlet) when the temperature of the fluid exiting the container is relatively hot, the corresponding one of the second valves (at the inlet during discharging) may be more closed than the other one of the two second valves. Thereby, also the efficiency during discharging may be improved when there are provided at least two second valves at different vertical positions for the second fluid port.

The two first valves may entirely define the fluid flow through or into the first fluid port. The second two valves may entirely control the fluid flow into or through the second fluid port.

The at least two temperature sensors may be arranged within the container within at least one plane perpendicular to the flow direction, i.e. one plane perpendicular to the horizontal direction. By having the at least two temperature sensors within the container, advantageously, temperature values may be measured and utilized for controlling the at least two first valves and/or the at least second valves. Thereby, in particular an inhomogeneous temperature distribution across or along the vertical direction may be detected or even quantified, allowing to more accurately control the two first valves and/or the two second valves for improving the efficiency of the arrangement during discharging and/or charging. The two temperature sensors may be arranged in a single plane perpendicular to the flow direction or for example in two planes perpendicular to the flow direction which are spaced apart along the horizontal direction which is the flow direction.

According to an embodiment of the present invention, the first fluid port is formed by at least two first fluid port members arranged at different vertical positions, the fluid flow through each of the two first fluid port members being controlled by one of the two first valves, and/or wherein the second fluid port is formed by at least two second fluid port members arranged at different vertical positions, the fluid flow through each of the two second fluid port members being controlled by one of the two second valves.

The number of first fluid port members may be equal to the number of first valves. The number of the second fluid port members may be equal to the number of second valves. In particular, each of the first fluid port members may have an associated first valve which controls the flow of the fluid through or to the respective first fluid port member. Each of the second fluid port members may have an associated second valve which may control the flow of the fluid through or to the respective second fluid port member.

The first fluid port members and/or the second fluid port members may for example be configured or formed by pipe sections or different separate openings in the container wall. When the first fluid port members are at different vertical position, fluid may be supplied to the or into the container at different heights in a controlled member for achieving a more homogeneous temperature distribution for example during charging. When the second fluid port members are arranged at different vertical positions, also during discharging, the fluid may be supplied into the container at different heights, thereby allowing to achieve also a more homogeneous temperature distribution during discharging by appropriately controlling the at least two second valves.

According to an embodiment of the present invention, the arrangement further comprises at least two further temperature sensors arranged within the container at different vertical positions and within at least one further plane perpendicular to the flow direction.

When at least two further temperature sensors are arranged at a further plane different from the plane where the at least two temperature sensors are arranged, also a temperature variation along the flow direction, i.e. the horizontal direction, may be measurable, thereby in particular allowing to measure or determine a temperature distribution across a three-dimensional space within the container. Thereby, controlling the first valves and/or the second valves may still be improved.

According to an embodiment of the present invention, thus for each valve of the at least two second valves and the at least two first valves, there is at least one temperature sensor present within the container which is arranged downstream the respective valve in a charging flow direction as well as in a discharging flow direction. When there is a temperature sensor arranged downstream the valve, the temperature of the fluid flowed through the valve is measurable, thereby providing an advantageous control parameter. It may for example be desired to achieve a relatively homogeneous (constant) temperature distribution across the vertical direction which may be achieved by differently opening or closing the valves in different vertical positions (upstream the respective temperature sensor).

During charging the at least two first valves may serve as inlet valves and the associated temperature sensors may be arranged with the container. During charging the two second valves may serve as outlet valves and the associated temperature sensors may be arranged outside the container, for example within or at the respective second fluid port members. During discharging, the two second valves may serve as inlet valves and the respective associated temperature sensors may be arranged within the container. During discharging the two first valves may serve as outlet valves and the respective temperature sensors may be arranged outside the container (for example within or at the first fluid port members).

The at least one temperature sensor arranged downstream a considered valve may be arranged substantially in a same vertical position or height as the valve, in order to enable detecting the temperature of the fluid having flowed through the respective valve.

According to an embodiment of the present invention for each valve (of the at least two second valves and the at least two first valves) the at least two temperature sensors or at least two outer temperature sensors arranged outside the container comprise: at least one temperature sensor arranged downstream the valve in a charging and/or discharging flow direction, and in particular arranged such that a temperature related to a temperature of fluid flowed through the valve is measurable,
wherein the at least one temperature sensor arranged down-stream the valve is in particular arranged substantially in a same lateral region as the valve.

According to an embodiment of the present invention, the at least two first valves comprises at least four first valves distributed in a first plane substantially perpendicular to the flow direction and being spaced apart in two different lateral directions, and/or wherein the at least two second valves comprises at least four second valves distributed in a second plane substantially perpendicular to the flow direction and being spaced apart in two different lateral directions.

When there are provided the four first valves not only having different vertical position but for example also having different horizontal positions (in particular different positions in a horizontal direction which is perpendicular to the flow direction), also an inhomogeneous temperature distribution in the horizontal direction perpendicular to the flow direction may be diminished by appropriately controlling the respective valves. This may apply during charging only or discharging only or this may apply for both, the discharging and the charging process.

According to an embodiment of the present invention, the first fluid port serves as a fluid inlet during charging and serves as a fluid outlet during discharging, wherein the second fluid port serves as a fluid outlet during charging and serves as a fluid inlet during discharging, wherein the at least two first valves serve as inlet valves during charging and serve as outlet valves during discharging, wherein the at least two second valves serve as outlet valves during charging and serve as inlet valves during discharging.

While the expressions "first fluid port, second fluid port, first valves, second valves" refer to structural features of the arrangement, expressions "fluid inlet, fluid outlet, outlet valves, inlet valves" refer to different functions the different valves end ports may have. Thereby, discharging and charging of the arrangement is supported.

According to an embodiment of the present invention, the arrangement further comprises a valve controller (e.g. for each valve having a valve controller portion) adapted to control at least one of two first valves and/or the two second valves serving as inlet valve based on at least one temperature value measured by at least one of the temperature sensors arranged downstream the at least one inlet valve. E.g. two valve controller portions may control two valves.

During charging for example the valve controller may exclusively control the first valves and during discharging the valve controller may exclusively control the second valves, without controlling the remaining valves. Controlling the respective inlet valves may be more important than controlling the respective outlet valves. However, according to other embodiments of the present invention, also the respective outlet valves may be controlled by the valve controller.

When only the respective inlet or outlet valves are controlled, the control method may be simplified and in particular also less temperature values may be required. In particular, only temperature values of temperature sensors installed downstream the respective inlet valves may be considered.

According to an embodiment of the present invention, the valve controller is adapted to control at least one of the two first valves and/or the two second valves serving as outlet valve based on at least one temperature value measured by at least one of the temperature sensors arranged downstream the at least one outlet valve.

According to an embodiment of the present invention the valve controller is implemented as a centralized controller or a decentralized controller, having for each valve a controller portion. In particular, all the inlet valves are controlled by the valve controller. In the following the valve controller portions may collectively be referred to as the valve controller.

In particular, the valve controller may be configured to exclusively control the respective outlet valves without controlling the respective inlet valves. However, according to a particular embodiment of the present invention, the controller is configured to control both, the respective inlet valves and the outlet valves, during discharging and/or charging. For controlling the outlet valves, temperature values as measured by temperature sensors arranged outside the container may be utilized.

According to an embodiment of the present invention, the valve controller is adapted, during a charging process, to control the inlet valve and/or the outlet valve such as to dynamically: open an inlet valve having lower temperature downstream and/or temperature of the fluid flow through the valve more than an inlet valve having higher temperature downstream and/or temperature of the fluid flow through the valve, and/or open an outlet valve having lower temperature upstream and/or temperature of the fluid flow through the valve more than an outlet valve having higher temperature up-stream and/or temperature of the fluid flow through the valve. Thereby, a more even or homogeneous or constant temperature distribution across the vertical direction may be achievable.

According to an embodiment of the present invention, the valve controller is configured to control at least one of the inlet valves during charging and/or during discharging, including: determining an inlet valve associated actual value of temperature (also referred to as "process value"); and determining an inlet valve setting signal (for each of inlet valves) based on a deviation between the inlet valve associated actual value of the temperature and an inlet target value of the temperature, in particular using a PI or PID controller.

The inlet valve associated actual value of the temperature may be a temperature value which is associated with the considered inlet valve (or the considered inlet fluid port member). The inlet valve associated actual value of the temperature may be determined as a temperature downstream the respective inlet valve being substantially in a same vertical position or height of vertical region or same height region as the considered inlet valve and being also in particular in a same or similar lateral region. The target value of the temperature may be a predefined value which may in particular be applied to all inlet valves which are present and which may for example be arranged within substantially a single plane or which may be arranged substantially in a same horizontal position along the flow direction.

The inlet valve setting signal may define a degree of opening or degree of closing the respective valve. The inlet valve setting signal may be supplied to the respective inlet valve thereby causing adjusting the inlet valve correspondingly. The PI controller may be a proportional integrative controller having a parameter of controller parameters for the proportional term and the integration term. Thereby, conventionally available controllers may be utilized.

According to an embodiment of the present invention, to control at least one of the inlet valves includes: determining a plane and/or a location along the flow direction where the temperature (e.g. a maximum temperature over the plane) reaches a predetermined fraction of a charging related temperature or a discharging related temperature; determining the inlet valve associated actual value of temperature ("process value") based on (e.g. an average of) at least one temperature as measured by at least one temperature sensor arranged in the determined plane/location in a same/overlapping lateral region as the inlet valve; determining the inlet target value of the temperature ("target value") for all inlet valves as a predetermined fraction of, the maximum for charging and the minimum for discharging, of the inlet valve associated actual values of the temperature.

The determined plane and/or location along the flow direction where the temperature reaches a predetermined fraction of a charging related temperature or a discharging related temperature may also be referred to as a temperature front plane. The plane and/or location may change during performing a discharging or charging process and may be updated by the controller or the control method. The determined plane and/or location along the flow direction may be downstream the inlet valve for which the actual value of the temperature is determined.

During charging the predetermined fraction of the maximum of the inlet value associated actual values of the temperature is utilized as the inlet target value of the temperature for all inlet valves. During discharging, the predetermined fraction of the minimum of the inlet valve associated actual values of the temperature is utilized as the inlet target value of the temperature. According to other embodiments, for different inlet valves different inlet target values may be defined. The inlet valve associated actual value of the temperature may for example be determined as an average, in particular weighted average, of temperature values as measured by temperature sensor(s) arranged in the determined plane/location (in particular front temperature plane) in a same or overlapping lateral region as the considered inlet valve.

According to an embodiment of the present invention, the valve controller is configured to control at least one of the outlet valves during charging and/or during discharging, including: determining an outlet valve associated actual value of temperature (also called "process value"); determining an outlet valve setting signal (for each of outlet valves) based on a deviation between the outlet valve associated actual value of the temperature and an outlet target value of the temperature, in particular using a PI or PID controller.

Thus, also the outlet valves may separately or additionally be controlled, namely during charging and/or during discharging.

According to an embodiment of the present invention, to control at least one of the outlet valves includes: determining the outlet valve associated actual value of temperature ("process value") based on (e.g. average of) at least one temperature as measured by at least one temperature sensor arranged downstream the outlet valve in a same/overlapping lateral region as the outlet valve; determining the outlet target value of the temperature ("target value") for all outlet valves as a predetermined fraction of, the minimum for charging and the maximum for discharging, of the outlet valve associated actual values of the temperature.

The outlet valve associated actual value of the temperature may for example be determined as an average, in particular weighted average, of several temperature values as measured by a temperature sensor arranged downstream the outlet valve which temperature sensors may for example be arranged in a lateral region overlapping or corresponding to that of the outlet valve. According to different embodiments of the present invention, the outlet target value may specifically be determined for each of the outlet valves, being in particular different for the different outlet valves.

According to an embodiment of the present invention, the valve controller is adapted to determine the outlet valve setting signal and/or the inlet valve setting signal further based on a physical and/or chemical property of the storage material. For example, the thermal capacity of the storage material, the density of the storage material and the like may be considered by the valve controller.

It should be understood, that features, individually or in any combination disclosed, described, explained or provided for an arrangement for receiving and/or releasing thermal energy may also be applied, individually or in any combination, to a method of receiving and/or releasing thermal energy, according to embodiments of the present invention and vice versa.

According to an embodiment of the present invention, it is provided a method of receiving and/or releasing thermal energy, comprising: allowing, via a first fluid port for which at least two first valves are arranged at different vertical positions and via a second fluid port for which at least two second valves are arranged at different vertical positions, inflow and outflow of fluid flowing through a container holding storage material in a substantially horizontal flow direction for charging and/or discharging the storage material; measuring at least two temperature values within the container at different vertical positions and within at least one plane perpendicular to the flow direction.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Similar elements are labeled with reference signs differing in the last digit.
Figs. 1 and 2 schematically illustrate an arrangement for receiving and/or releasing thermal energy according to an embodiment of the present invention during a charging process and a discharging process, respectively;
Figs. 3 and 4 illustrate conventional devices for storing thermal energy;
Fig. 5 schematically illustrates a perspective view of a portion of an arrangement for receiving and/or releasing thermal energy according to an embodiment of the present invention;
Fig. 6 schematically illustrates in a sectional view a portion of an arrangement for receiving and/or releasing thermal energy according to an embodiment of the present invention;
Fig. 7 schematically illustrates in a sectional view an arrangement for receiving and/or releasing thermal energy according to an embodiment of the present invention;
Figs. 8 and 9 schematically illustrate temperature measurement equipment in different planes orthogonal to a flow direction of an arrangement for receiving and/or releasing thermal energy according to an embodiment of the present invention.

### Detailed Description

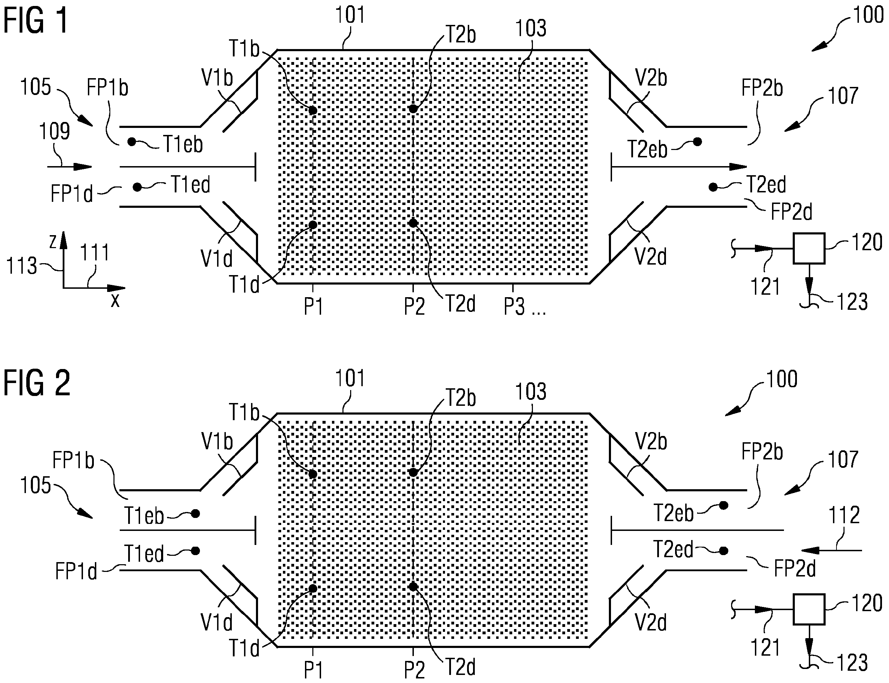

The arrangement 100 for receiving and/or releasing, in particular also storing, thermal energy according to an embodiment of the present invention illustrated in Figs. 1 and 2 during a charging process and a discharging process, respectively, comprises a container 101 for holding storage material 103, wherein the container 101 comprises a first fluid port 105 and a second fluid port 107 for allowing inflow and outflow of fluid 109 flowing through the container 101 in a substantially horizontal flow direction 111 (corresponding to an x-axis direction) for charging and/or discharging the storage material 103. The flow direction 111 corresponds to or is even equal to the horizontal direction. A vertical direction (z-axis direction) is indicated with reference sign 113.

The arrangement 100 comprises at least two first valves, namely a valve V1b and V1d which are arranged at different vertical positions (as measured along the vertical direction 113). Gravity acts in the vertical direction 113 towards the centre of earth. The arrangement 100 further comprises at least two second valves, V2b, V2d also at different vertical positions which are provided for the second fluid port 107. The arrangement 100 further comprises at least two temperature sensors, for example the temperature sensors T1d and T1b which are arranged within the container 101 at different vertical positions, in particular at vertical positions corresponding to or being substantially equal to the vertical positions of the two first valves V1b and V1d. In particular, the temperature sensors T1b, T1d are arranged in a same plane P1 being perpendicular to the flow direction 111 and which is downstream the two first valves V1b, V1d during the charging process, as is illustrated in Fig. 1. According to other embodiments of the present invention, plural further or other temperature sensors, e.g. T2b, T2d, are arranged within the container 101 and also outside the container 101, such as temperature sensors T1eb arranged within a first fluid port member FP1b and a temperature sensor T1ed arranged within a first fluid port member FP1d.

Herein, in the embodiment illustrated in Figs. 1 and 2, the first fluid port 105 is formed by at least two first fluid port members FP1b and FP1d which are arranged at different vertical positions wherein the fluid flow through each of the two first fluid port members FP1b and FP1d are controlled by one of the two first valves V1b and V1d. Also, in the illustrated embodiment, the second fluid port 107 is formed by at least two second fluid port members FP2b and FP2d which are arranged at different vertical positions, wherein the fluid flow through each of the two second fluid port members FP2b, FP2d being controlled by one of the two second valves, V2b, V2d, respectively.

In the illustrated embodiment, the arrangement 100 comprises at least two further temperature sensors T2b, T2d which are arranged within the container 101 at different vertical positions and within at least one further plane P2 which is spaced apart in the flow direction 111 from the first plane P1 and is perpendicular to the flow direction 111. Also within the second fluid port members FP2b, FP2d respective temperature sensors T2eb and T2ed are arranged so that they are downstream the second valves V2b, V2d during a charging process, as illustrated in Fig. 1.

As can be appreciated from Figs. 1 and 2, the first fluid port 105 serves as a fluid inlet during charging and serves as a fluid outlet during discharging, the second fluid port 107 serves as a fluid outlet during charging and serves as a fluid inlet during discharging. Furthermore, the at least two first valves V1b, V1d serve as inlet valves during charging and serve as outlet valves during discharging and the at least two second valves V2b, V2d serve as outlet valves during charging and serve as inlet valves during discharging.

The arrangement 100 further comprises a valve controller 120 which is adapted to control at least one of two first valves V1b, V1d and/or the two second valves V2b, V2d serving as inlet valves (in particular comprising for each valve a controller portion), based on at least one temperature value 121 measured by at least one of the temperature sensors T1b, T1d, T2b, T2d, T1eb, T1ed, T2eb, T2ed which are arranged down-stream the at least inlet valve. The valve controller 120 is further adapted to control one of the afore-mentioned valves which serve as outlet valve. Thereby, the valve controller 120 supplies one or more valve setting signals 123 to the one or more controlled valves.

During a discharging process, the flow direction 111 of the charging process is reversed to a flow direction 112, as is illustrated in Fig. 2. During discharging, the at least two second valves V2b, V2d serve as inlet valves and the at least two first valves V1b, V1d serve as outlet valves.

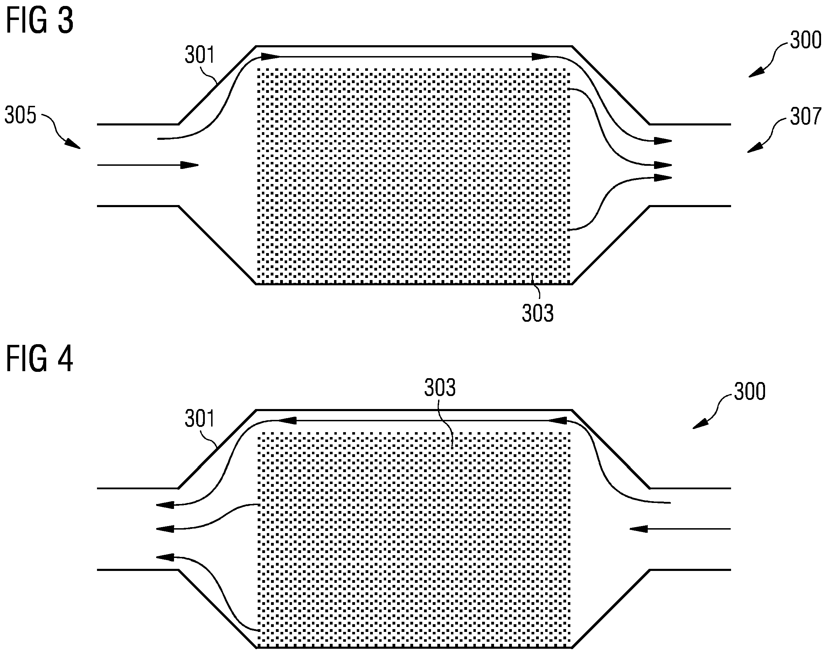

Figs. 3 and 4 illustrate a conventional heat storage device 300 comprising a container 301 having fluid ports 305, 307 for inflow and outflow of fluid. The conventional storage device does not comprise dynamically controllable valves and does not comprise one or more temperature sensors within the container. Due to gravity during charging as well as during discharging (illustrated in Fig. 4), an inhomogeneous temperature distribution along a vertical direction is present, decreasing the efficiency of the thermal energy storage.

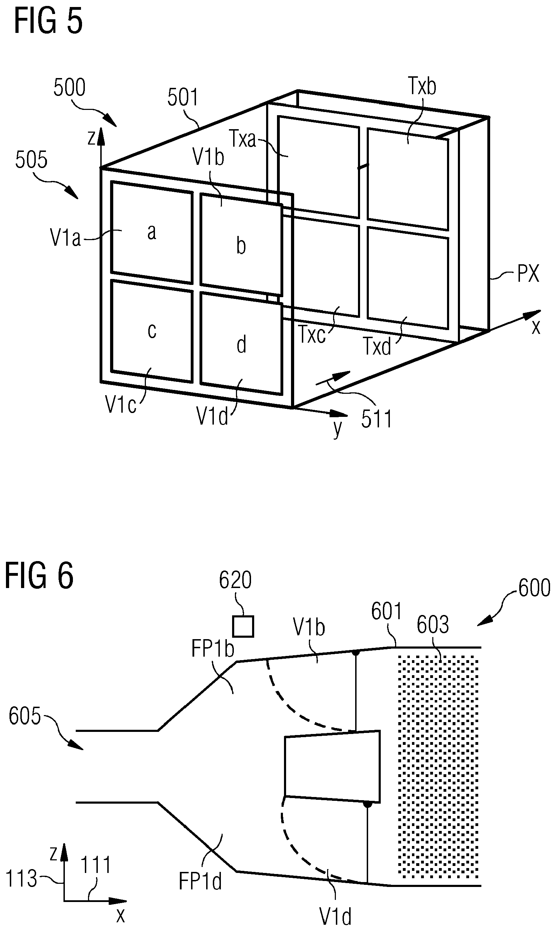

Fig. 5 schematically illustrates in a perspective view a portion of an arrangement 500 for receiving and/or releasing thermal energy according to an embodiment of the present invention. At a first fluid port 505, four first valves V1a, V1b, V1c, V1d are provided allowing to separately control fluid flow into or out of the container 501. Furthermore, spaced apart in the flow direction 511 the arrangement 500 comprises an array of temperature sensors TXa, TXb, TXc, TXd, wherein the letter "X" refers to a particular plane PX within the container 501 which is perpendicular to the flow direction 511. In particular, the temperature sensor TXa is arranged within a same or similar lateral region as the first valve V1a and is configured to measure temperature of fluid flowed through the first valve V1a, for example during a charging process.

In particular, the four valves V1a, V1b, V1c, V1d are spaced apart in two lateral directions, for example lateral directions y and z being perpendicular to the flow direction which is in the direction of the x-coordinate. According to other embodiments of the present invention, an arrangement for releasing and/or receiving thermal energy may comprise several arrays of temperature sensors which are arranged at different planes spaced apart in the flow direction 511.

Fig. 6 schematically illustrates a portion of an arrangement 600 for receiving and/or releasing thermal energy according to an embodiment of the present invention in a sectional view. The arrangement 600 comprises a container 601 comprising storage material 603. For a first fluid port 605 two first valves V1b, V1d are provided which are arranged at different vertical positions along the vertical direction 113 being the z-axis of a coordinate system. The first valves V1b and V1d are controlled regarding the opening or closing state by the valve controller 620 similar as is described with reference to Figs. 1 and 2.

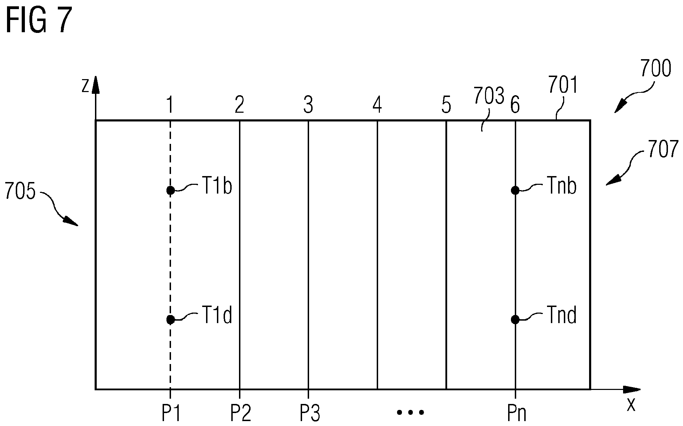

In the following, an exemplary embodiment of a method for charging and/or discharging the arrangement 100, 500, 600 is described with reference to Figs. 7, 8 and 9. In other embodiments, other target temperatures or charging temperatures may be utilized. Furthermore, any averaging methodology may be utilized or applied to derive for example actual temperature value. The weighting of different temperature values determined by different temperature sensors may be according to an effected volume element the respective temperature sensor is associated with.

The position of each valve is controlled depending on the temperature of the heat transporting fluid and the storage material. When charging the heat storage, the exiting heat flow needs to be as low as possible for a defined total mass flow of the heat transporting fluid. When discharging the heat storage, the exiting heat flow needs to be higher than a defined value as long as possible. The value is defined by the discharging cycle.

This means that the temperature at the respective outlet needs to be as low as possible when charging and higher than a defined value as long as possible when discharging the heat storage.

Because there is an uneven distribution of the temperature profile as described above for the conventional system, control parameters need to be calculated. The dynamic valve control can be used to create a more vertical temperature front between the hot storage material and the cold storage material. The up-stream valves at the inlet are preliminary used to control the temperature profile whereas the down-stream valves at the outlet are just used for additional adjusting. Especially during discharge the valves at the inlet redirect the flow from the cold storage material into the hot storage material. If a gap has been formed the valves can redirect the flow from the gap to the storage material.

To get a better and more reliable temperature profile of the fluid flowing through the storage material, numerous temperature sensors should be used. Therefore, the storage is divided into many temperature planes orthogonal to the flow direction. A temperature is defined to specify the temperature front. For charging it is a lower temperature than charging temperature, calculated by a constant factor smaller than 1. For discharging it is a temperature lower than the minimal possible outlet temperature, calculated by a factor smaller than 1. The control algorithm searches each sensor in each plane for the defined temperature. The algorithm is started at the cold side of the storage and moves further plane by plane. The first plane where the searched temperature occurs is defined as the temperature front plane and will be used to calculate the control parameters.

### Example: Charging the storage

Fig. 7 schematically illustrates an arrangement 700 for receiving and/or releasing thermal energy according to an embodiment of the present invention including a container 701 containing storage material 703. The fluid enters during a charging process. The first fluid port 705 comprises not in detail illustrated valves at different z-positions. At plural planes P1, P2, ... Pn temperature sensors T1b, T1d, ... Tnb, Tnd are present within the container 701. Not illustrated temperature sensors may also be present at different lateral positions along the Y-axis. The temperature sensors may be utilized for determining a temperature front plane as described below.

The control algorithm at the inlet is as follows:
1. Calculating the temperature of the temperature front plane with factor x.
2. searching for the plane the temperature occurs the first time, that Plane is defined as the Temperature frontplane.
3. Finding the actual process values for each valve
   The plane of the temperature front has been found in step 1. The actual process values for each valve are calculated by taking the average temperature of all sensors within the part of the temperature front behind that valve.

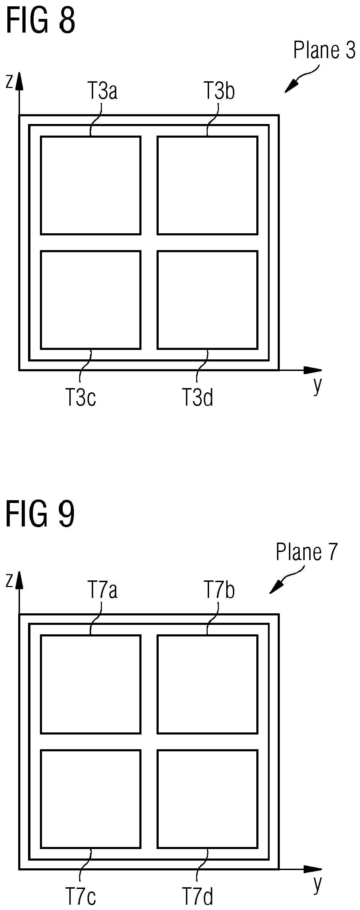

   Fig. 8 illustrates temperature measurement values as determined by temperature sensors placed within the third plane P3, wherein each of the temperature sensors T3a, T3b, T3c and T3d comprise four independent temperature sensors such that for each of the temperature sensor in fact four temperatures are measured. For each of the temperature sensors T3a, ... , an associated average temperature is determined. As can be appreciated from Fig. 8, during the charging process, the determined temperature values are higher for the temperature sensors at a higher vertical position z.
4. Calculate the target value
   The target value for each valve for charging / discharging is a defined percentage of the maximum / minimum process value of step 2. This is the target value for all of the valves at the inlet.
5. Dynamic valve control
   Each valve is controlled with a simple PI controller. The target value for each valve has been calculated in step 3 the process value in step 2.

If the actual process value is greater than the target value the respective valve closes. If the process value is lower than the target value the respective valve opens.
The dynamic valve control at the outlet should complement the control of the temperature profile. A temperature is calculated as a target value for the dynamic valve control. As soon as the average temperature behind the valve during charging / discharging exceeds / falls below this temperature criterion, the respective valve closes so that only fluid with a temperature equal to or lower / higher than the temperature criterion can exit the heat storage.

The control algorithm at the outlet is as follows:
1. Calculate the process value at the outlet the process value for each valve is defined as the average temperature behind that valve.
   Fig. 9 illustrates temperature sensors T7a, T7b, T7c, T7d for measuring temperature values in the seventh plane P7 which may be utilized for controlling valves at the outlet. Plane 7 may in fact be located outside the container, for example in a pipe section downstream the respective outlet valve.
2. Calculate the target value at the outlet
   For charging it's a temperature greater than the minimum process value calculated by a factor higher than 1.
   For discharging it's a temperature lower than the maximum process value of step 1, calculated by a factor smaller than 1.
3. Dynamic valve control
   Each valve is controlled with a simple PI controller. The target value for each valve has been calculated in step 2, the process value in step 1.

If the actual process value is higher than the target value, the respective valve closes, if it's bigger than the target value it closes.

According to an embodiment of the present invention, a dynamic control system controls valves which are positioned at the inlet and the outlet of a heat storage device. The control system may increase the degree of utilization of the heat storage by adjusting the flow and therefore the temperature distribution inside the heat storage. The heat loss resulting from the bypass through a gap which is formed during operation may be reduced as well.

## Claims

1. Arrangement (100) for receiving and/or releasing, in particular storing, thermal energy, comprising:
a container (101) for holding storage material (103), the container having a first fluid port (105) and a second fluid port (107) for allowing inflow and outflow of fluid (109) flowing through the container in a substantially horizontal flow direction (111, 112) for charging and/or discharging the storage material (103);
at least two first valves (V1b, V1d) at different vertical positions for the first fluid port (105);
at least two second valves (V2b, V2d) at different vertical positions for the second fluid port (107); and
at least two temperature sensors (T1b, T1d) arranged within the container (101) at different vertical positions, in particular in one plane (P1) perpendicular to the flow direction.

2. Arrangement according to the preceding claim,
wherein the first fluid port (105) is formed by at least two first fluid port members (FP1b, FP1d) arranged at different vertical positions, the fluid flow through each of the two first fluid port members (FP1b, FP1d) being controlled by one of the two first valves (V1b, V1d), and/or
wherein the second fluid port (107) is formed by at least two second fluid port members (FP2b, FP2d) arranged at different vertical positions, the fluid flow through the two second fluid port members (FP2b, FP2d) being controlled by the two second valves (V2b, V2d).

3. Arrangement according to one of the preceding claims, further comprising:
at least two further temperature sensors (T1b, T1d) arranged within the container (101) at different vertical positions and within at least one further plane (P2) perpendicular to the flow direction (111, 112).

4. Arrangement according to one of the preceding claims, wherein for each valve of the at least two second valves and the at least two first valves the at least two temperature sensors or at least two outer temperature sensors (T1eb, T1ed, T2eb, T2ed) arranged outside the container comprise:
at least one temperature sensor arranged such that a temperature related to a temperature of fluid flowed through the valve is measurable,
wherein the at least one temperature sensor arranged down-stream the valve is in particular arranged substantially in a same lateral region as the valve.

5. Arrangement according to one of the preceding claims, wherein the at least two first valves (V1b, V1d) comprises at least four first valves (V1a, V1b, V1c, V1d) distributed in a first plane substantially perpendicular to the flow direction and being spaced apart in two different lateral directions (z,y), and/or
wherein the at least two second valves (V2b, V2d) comprises at least four second valves (V2a, V2b, V2c, V2d) distributed in a second plane substantially perpendicular to the flow direction and being spaced apart in two different lateral directions (z,y).

6. Arrangement according to one of the preceding claims, wherein the first fluid port (105) serves as a fluid inlet during charging and serves as a fluid outlet during discharging,
wherein the second fluid port (107) serves as a fluid outlet during charging and serves as a fluid inlet during discharging,
wherein the at least two first valves (V1b, V1d) serve as inlet valves during charging and serve as outlet valves during discharging,
wherein the at least two second valves (V2b, V2d) serve as outlet valves during charging and serve as inlet valves during discharging.

7. Arrangement according to one of the preceding claims, further comprising:
a valve controller (120) or a valve controller for each valve, adapted to control (123) at least one of two first valves (V1b, V1d) and/or the two second valves (V2b, V2d) serving as inlet valve based on at least one temperature value (121) measured by at least one of the temperature sensors (T1b, T1d) arranged downstream the at least one inlet valve.

8. Arrangement according to one of the preceding claims, wherein the valve controller (120) is adapted to control (123) at least one of the two first valves (V1b, V1d) and/or the two second valves (V2b, V2d) serving as outlet valve based on at least one temperature value (121) measured by at least one of the temperature sensors (T1b, T1d) arranged up-stream the at least one outlet valve.

9. Arrangement according to the preceding claim, wherein the valve controller (120) is adapted, during a charging process, to control the inlet valve and/or the outlet valve such as to dynamically:
open an inlet valve having lower temperature downstream and/or temperature of the fluid flowed through the valve more than an inlet valve having higher temperature downstream and/or temperature of the fluid flowed through the valve, and/or
open an outlet valve having lower temperature upstream and/or temperature of the fluid flowed through the valve more than an outlet valve having higher temperature upstream and/or temperature of the fluid flow through the valve.

10. Arrangement according to one of the preceding claims, wherein the valve controller is configured to control at least one of the inlet valves during charging and/or during discharging, including:
determining an inlet valve associated actual value of temperature; and
determining an inlet valve setting signal based on a deviation between the inlet valve associated actual value of the temperature and an inlet target value of the temperature, in particular using a PI or PID controller.

11. Arrangement according to the preceding claim, wherein to control at least one of the inlet valves includes:
determining a plane and/or a location along the flow direction where the temperature reaches a predetermined fraction of a charging related temperature or a discharging related temperature;
determining the inlet valve associated actual value of temperature based on at least one temperature as measured by at least one temperature sensor arranged in the determined plane/location in a same/overlapping lateral region as the inlet valve;
determining the inlet target value of the temperature for all inlet valves as a predetermined fraction of, the maximum for charging and the minimum for discharging, of the inlet valve associated actual values of the temperature.

12. Arrangement according to one of the preceding claims, wherein the valve controller is configured to control at least one of the outlet valves during charging and/or during discharging, including:
determining an outlet valve associated actual value of temperature;
determining an outlet valve setting signal (for each of outlet valves) based on a deviation between the outlet valve associated actual value of the temperature and an outlet target value of the temperature, in particular using a PI or PID controller.

13. Arrangement according to the preceding claim, wherein to control at least one of the outlet valves includes:
determining the outlet valve associated actual value of temperature based on at least one temperature as measured by at least one temperature sensor arranged upstream the outlet valve in a same/overlapping lateral region as the outlet valve;
determining the outlet target value of the temperature for all outlet valves as a predetermined fraction of, the minimum for charging and the maximum for discharging, of the outlet valve associated actual values of the temperature.

14. Arrangement according to one of the preceding claims, wherein the valve controller is adapted to determine the outlet valve setting signal and/or the inlet valve setting signal further based on a physical and/or chemical property of the storage material.

15. Method of receiving and/or releasing thermal energy, comprising:
allowing, via a first fluid port (105) for which at least two first valves (V1b, V1d) are arranged at different vertical positions and via a second fluid port (107) for which at least two second valves (V2b, V2d) are arranged at different vertical positions, inflow and outflow of fluid (109) flowing through a container (101) holding storage material (104) in a substantially horizontal flow direction (111, x) for charging and/or discharging the storage material;
measuring at least two temperature values (121) within the container at different vertical positions and in particular positioned within at least one plane (P1) perpendicular to the flow direction.
